(19) Europäisches Patentamt
European Patent Office
Office européen des brevets

(11) **EP 0 720 098 B1**

(12) **FASCICULE DE BREVET EUROPEEN**

(45) Date de publication et mention
de la délivrance du brevet:
**20.06.2001 Bulletin 2001/25**

(51) Int Cl.⁷: **G06F 12/14**

(21) Numéro de dépôt: **95402870.0**

(22) Date de dépôt: **19.12.1995**

(54) **Dispositif de sécurisation de systèmes d'information organisés autour de microprocesseurs**

Einrichtung zur Sicherung von Informationssystemen, die auf der Basis von Mikroprozessoren organisiert sind

Apparatus for securing information systems organised around microprocessors

(84) Etats contractants désignés:
**DE FR GB IT**

(30) Priorité: **30.12.1994 FR 9415943**

(43) Date de publication de la demande:
**03.07.1996 Bulletin 1996/27**

(73) Titulaire: **THOMSON-CSF**
**75008 Paris (FR)**

(72) Inventeur: **Romenteau, Pierre**
**F-92402 Courbevoie Cedex (FR)**

(74) Mandataire: **Lincot, Georges et al**
**Thomson-CSF Propriété Intellectuelle,**
**Département Brevets,**
**13, Avenue du Président Salvador Allende**
**94117 Arcueil Cédex (FR)**

(56) Documents cités:
**GB-A- 2 203 271**          **US-A- 4 278 837**
**US-A- 5 081 675**

## Description

La présente invention concerne un dispositif de sécurisation de systèmes d'information organisés autour de microprocesseurs du type décrit dans le brevet USA 5 081 675.

Le domaine technique est celui de la sécurité informatique civile et militaire et s'applique à toute la chaîne informatique (outil de développement logiciel, logiciel exécutable, et ordinateur ou appareil à microprocesseur), pour contrôler l'utilisation de la machine informatique, et protéger les logiciels contre l'analyse et la modification.

Avant de débuter la description de la présente invention, une définition des termes employés usuellement en informatique est donnée ci-après :

On entend par logiciel, une suite d'instructions, écrites dans un langage informatique, qui définit un traitement ou une série de traitement à faire exécuter par un microprocesseur.

Un logiciel peut se présenter sous plusieurs formes:

- en code source, écrit par le développeur, sous forme d'une suite d'instruction en langage "évolué" (PASCAL, C, FORTRAN, Assembleur...). Ce code source est compréhensible, réutilisable et modifiable par l'homme, mais n'est pas directement utilisable par le microprocesseur.
- en code exécutable ou compilé, obtenu par l'opération dite de "compilation" du code source.

Le code exécutable est la traduction du code source en une suite d'instructions binaires du microprocesseur. Ces instructions binaires sont définies par le fabricant du microprocesseur sous la désignation de "jeu d'instructions".

On considère habituellement que l'opération de compilation est une opération non inversible, et qu'un logiciel sous forme compilée, n'est pas exploitable ni analysable.

En effet, lors de la compilation du logiciel, des informations, telles que les noms des variables, des étiquettes et des procédures disparaissent. En général, ces noms ont une signification fonctionnelle qui facilite l'analyse.

Le code exécutable, lui, ne contient plus que la localisation (ou l'adresse) des données à traiter, ainsi que la suite d'instruction à exécuter. Toutefois, concernant cette suite d'instructions, il existe une relation bijective, entre code source et code exécutable.

Il est donc possible, par des moyens manuels ou automatiques, proposés parfois dans le commerce, de remonter à un code source semblable au code originel à partir du code compilé. C'est l'opération dite de "décompilation". Lors de cette opération, on affecte arbitrairement des noms non fonctionnellement significatifs aux variables et aux étiquettes.

Une étape supplémentaire, par rapport à l'analyse directe du code source, consiste à recréer peu à peu, au fur et à mesure de l'analyse, des noms de variables significatifs. Cette opération est longue, mais nullement impossible. Elle peut, en outre, n'être réalisée que partiellement si l'on n'analyse qu'une partie du logiciel.

Le logiciel ainsi décompilé peut alors être, modifié, réutilisé et recompilé de telle façon qu'il est très difficile au propriétaire du logiciel original de prouver la fraude, la contrefaçon ou la malveillance.

Les menaces dues à la décompilation, constatées dans le monde informatique, sont de plusieurs types dont les principaux sont énumérés ci-dessous :

- un premier type de menace se rapporte à la copie illicite ("piratage") de logiciel :

Dans le domaine informatique civil, le développement d'un logiciel de type traitement de texte, tableur, graphique, représente un investissement considérable. En général, ces logiciels sont livrés avec une clé de protection matérielle (boîtier externe à connecter à l'ordinateur), ou logicielle (fichier caché sur le disque, de format non standard).

Or, des "pirates" informatiques parviennent, par analyse du code exécutable, à en supprimer les procédures de protection. Le logiciel ainsi modifié est toujours fonctionnel, mais devient copiable et utilisable à l'infini. Cette pratique, cause un préjudice considérable aux sociétés éditrices.

- un deuxième type de menace se rapporte à l'analyse des logiciels :

Les algorithmes et les principes de codage qui ont mené à la conception d'un logiciel, (algorithmes de tri dans les gestionnaires de base de données, procédés de calcul dans les tableurs ou dans les logiciels CAO, algorithmes de traitement du signal dans les équipements de télécommunications) constituent un savoir-faire essentiel pour la société qui les développe, et qu'il convient donc de protéger de la décompilation et de l'analyse.

Ce problème concerne les logiciels exécutables sur ordinateur, ainsi que les logiciels dits "enfouis" (logiciel spécifique formant un ensemble indissociable avec son appareil hôte, dont il assure la gestion et le fonctionnement: téléviseurs, calculateur automobile, périphérique informatique, ou autre appareil géré par microprocesseur).

- un troisième type de menace se rapporte aux logiciels militaires classifiés :

Certains logiciels, destinés aux applications militaires, contiennent des procédures confidentielles. La menace de décompilation et d'analyse implique une classification de l'appareil lui-même, et donc des surcoût importants et de très fortes contraintes d'utilisation.

- et un quatrième type de menace se rapporte à la modification malveillante ou virus.

Concernant l'informatique civile et militaire, les systèmes informatiques sont soumis à des attaques par modification ou adjonction malveillante de logiciel, de type virus informatique.

L'attaque consiste à adjoindre au logiciel originel, une portion de code exécutable. Lors du lancement de ce logiciel, c'est le virus qui s'exécute en réalité. Il a alors la faculté, de se dupliquer sur d'autres logiciels exécutables, et de perturber le fonctionnement de l'ordinateur.

La sécurité informatique est aujourd'hui abordée de façon hétérogène, chaque problème étant résolu de façon partielle et ponctuelle.

Les principales solutions connues de protection des logiciels contre la copie illicite sont décrites ci-après:

- une première solution met en oeuvre un système de protection logique :

Ce système de protection est employé pour les logiciels distribués sur support magnétique. On inclut sur ce support une zone de protection (secteur, fichier,...) dont le formatage particulier interdit une lecture ou une copie à l'aide du système d'exploitation standard. Lors du lancement du logiciel, celui-ci vérifie la présence de cette zone. En cas de non reconnaissance de celle-ci, l'exécution est interrompue.

Ce type de protection peut être contourné à l'aide de logiciels de copie spécialisés, capables de recréer sur un autre support magnétique une zone de protection identique à celle du support original.

Il est également possible de décompiler le logiciel protégé, de supprimer les instructions vérifiant la présence de la zone de protection, puis de le recompiler pour obtenir une version exécutable, non protégée, et copiable à l'infini.

- une deuxième solution met en oeuvre un système de protection physique :

Dans ce système de protection, la zone de reconnaissance sur support magnétique est remplacée par un élément physique, dit "clé de protection" ou "dongle", en terminologie anglo-saxonne, qui doit être connecté sur l'un des ports de l'ordinateur. La complexité de cet élément est telle que sa copie est impossible pour un coût inférieur à celui du logiciel. Ce système permet de garantir au fournisseur du logiciel que celui-ci ne pourra être exécuté que sur une seule machine à un moment donné.

Outre la contrainte de mise en oeuvre, et l'impossibilité de généraliser cette solution à tous les logiciels (il est difficile de connecter plus de deux clés de protection sur une même machine), cette solution présente également l'inconvénient d'être sensible à la décompilation. Il est en effet possible, de même que dans le cas précédent, de supprimer les instructions de contrôle de présence de cette clé dans le logiciel.

Dans certains cas, la clé de protection contient des éléments secrets indispensables à l'exécution du logiciel. Il est néanmoins possible de contourner cette protection si l'on possède un exemplaire de la clé de protection. Toujours par décompilation, et à l'aide d'outils spécialisés (débogueur, analyseur logique), on peut lire ces informations, puis les coder comme constantes dans le logiciel. A l'aide d'un exemplaire acheté régulièrement, on obtient une version non protégée copiable à l'infini.

- une troisième solution met en oeuvre un système de protection des logiciels d'ordinateurs contre la décompilation :

L'immense majorité des logiciels distribués largement dans le monde civil: traitements de texte, tableurs, etc. n'est pas protégée contre la décompilation. Toutefois, une solution parfois utilisée consiste à chiffrer (ou crypter) le logiciel. On lui adjoint un programme de déchiffrement et de lancement, et le bloc logiciel ainsi constitué est stocké par exemple en mémoire morte ou sur support magnétique (disque dur, disquette) ou un autre support. Le logiciel de déchiffrement peut utiliser une clé de protection matérielle (décrite précédemment) qui doit être connectée à la machine avant exécution. L'opération de décompilation ne peut donc être réalisée sur la version stockée sur le support que si la clé secrète est connue. L'accès à cette clé secrète est protégé par des procédures d'authentification classiques.

Lors du lancement du logiciel par l'utilisateur, l'exécution commence par le programme de déchiffrement et de lancement, qui contient l'algorithme de déchiffrement du logiciel exécutable. Ce programme s'authentifie vis à vis de la clé de protection matérielle, lit la clé secrète qu'elle contient, puis déchiffre le logiciel à protéger, le stocke en mémoire, et lance enfin son exécution. Le programme de déchiffrement et de lancement devient alors inutile.

Cette solution est applicable au monde des ordinateurs. Elle présente plusieurs faiblesses:

Le logiciel de déchiffrement peut lui même être soumis à la décompilation. Son analyse, ainsi que la possession d'une clé de protection matérielle associée permet de déchiffrer le logiciel exécutable.

D'autre part, le logiciel réside sous forme déchiffrée en mémoire pendant son exécution. Il suffit donc d'interrompre cette exécution, puis de recopier et d'analyser le contenu de cette mémoire pour contourner la protection.

- une quatrième solution met en oeuvre un système de protection des logiciels enfouis contre la décompilation et la modification :

On appelle logiciel enfoui un logiciel spécifique, stocké en mémoire morte, assurant la gestion de certains appareils électroniques: téléviseurs, appareils de mesure, périphériques informatiques, etc., et dont l'exécution est lancée dès la mise en route de l'appareil.

Ces logiciels sont également soumis au risque décompilation et de modification. Lors d'une opération de maintenance, par exemple, il est possible de substituer au support (en général, une mémoire morte) contenant le logiciel original un autre support contenant un logiciel modifié. Dans le cas d'une mise à jour logicielle par téléchargement, il est également possible de réaliser une telle substitution. L'appareil hôte peut alors être piégé ou rendu inopérant.

Dans ces logiciels enfouis, on peut citer les logiciels de bas niveau des ordinateurs ou des calculateurs (BIOS), les logiciels de gestion des distributeurs automatiques, des standards téléphoniques, des périphériques informatiques (imprimantes, disques durs), les logiciels de commande de moteur en électronique automobile ou aéronautique, etc.

Une solution connue pour préserver la confidentialité et l'intégrité du logiciel est de confiner celui-ci sur la même puce électronique que le microprocesseur. L'ensemble est appelé microcontrôleur. Cette protection est donc essentiellement physique. Elle réside dans l'importance des moyens à mettre en oeuvre (microscope électronique par exemple) pour remonter au contenu d'une mémoire par observation de la puce électronique.

L'inconvénient de cette solution est liée aux limitations de la technologie. Il n'est pas possible en effet d'intégrer de grosses capacités mémoires sur des puces de microcontrôleur. La capacité mémoire présente sur une puce de microcontrôleur est environ dix fois inférieure à la capacité d'une puce mémoire classique, ce qui limite d'autant la taille du logiciel supporté. De plus cette solution complique de façon importante les opérations de remise à jour logicielle, puisqu'il faut changer ou au moins reprogrammer le microcontrôleur.

Enfin cette solution, n'est applicable que pour des mono-applications. Elle ne permet pas l'exécution des logiciels divers, chargés par l'utilisateur de la machine. Elle n'est donc pas applicable pour un ordinateur.

L'invention a pour but de pallier les inconvénients précités.

L'objectif visé par la présente invention est de permettre la diffusion large de logiciels, stockés sur des supports courants: disquettes, disques durs, cartes à puce, téléchargement par réseau, mémoires mortes, etc., en garantissant leur intégrité et leur protection contre l'analyse, sans qu'il soit nécessaire de prendre des mesures de protection coûteuses.

A cet effet, l'invention a pour objet un dispositif de sécurisation de système d'informations organisé autour d'un microprocesseur, caractérisé en ce qu'il comporte, sur un même support, un coeur de microprocesseur capable d'exécuter un logiciel chiffré distribué par une chaîne de développement logicielle, couplé à un module cryptographique, en coupure sur les signaux d'entrée/sortie du coeur de microprocesseur, permettant de fournir à l'extérieur du dispositif des signaux d'adresses et de données chiffrées sortants, et de déchiffrer des signaux de données chiffrées entrants sur le dispositif selon un algorithme inverse de celui réalisé lors du chiffrement des signaux d'adresses et de données sortants.

L'invention est telle quelle revendiquée dans les revendications.

L'intérêt du dispositif selon l'invention est de concilier d'une part les avantages des solutions existantes décrites précédemment:

- le logiciel est stocké sous forme chiffrée sur les divers supports: mémoires non volatiles, disquettes, disques durs ou tout autre support d'enregistrement, comme pour le cas d'une sécurisation à base de déchiffrement logiciel.
- le logiciel sous sa forme claire est confiné chez le développeur d'une part et sur une puce électronique, comme pour le cas d'une sécurisation physique à base de microcontrôleur, d'où une grande difficulté à l'observer et à l'enregistrer, et

d'autre part, le dispositif selon l'invention présente les avantages supplémentaires suivants:

- le logiciel n'existe à aucun moment déchiffré dans sa totalité chez l'utilisateur, cette opération se faisant au "fil de l'eau", instruction par instruction,
- les données de travail du logiciel peuvent être stockées sous forme chiffrée dans une mémoire externe, ce qui limite encore les possibilité d'observation et de compréhension du séquencement du logiciel.

- le dispositif est multi-applications : Il est possible de faire exécuter par le dispositif selon l'invention tout type de logiciel. Les mises à jour sont donc aussi souples que pour une logiciel non sécurisé, contrairement à la solution microcontrôleur.

D'autres avantages et caractéristiques de la présente invention apparaîtront plus clairement en regard des figures annexées qui représentent :

- la figure 1, un schéma synoptique d'un dispositif selon l'invention,
- la figure 2, une architecture d'un microprocesseur MALP selon l'invention,
- la figure 3, un exemple d'application à microprocesseur,
- la figure 4, un exemple de table de configuration de sécurité d'un dispositif selon l'invention,
- la figure 5, un schéma synoptique d'un module cryptographique d'un dispositif selon l'invention, et
- la figure 6, une chaîne de développement logicielle d'un dispositif selon l'invention.

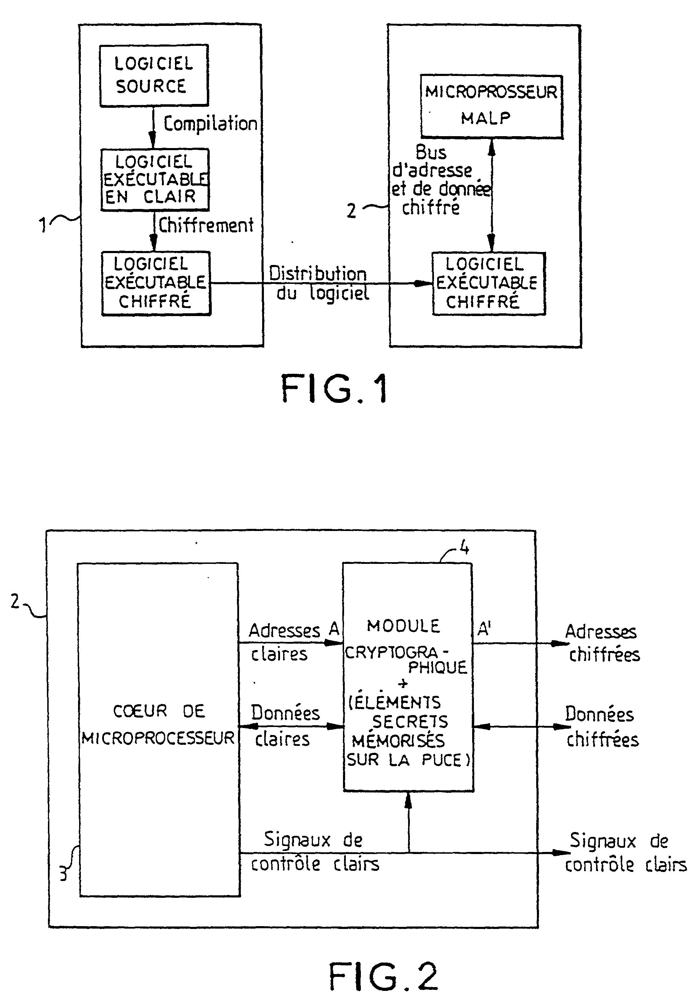

Le principe de l'invention est illustré par le schéma synoptique de la figure 1.

Le dispositif selon l'invention intègre une chaîne de développement 1 d'un logiciel chiffré et un microprocesseur spécialisé 2 capable d'exécuter un logiciel chiffré et d'assurer la sécurité, la protection contre l'analyse et l'intégrité du logiciel de bout en bout.

Ce microprocesseur spécialisé est nommé microprocesseur "MALP", abréviation pour "Microprocesseur pour Applications Logicielles Protégées", dans la suite de la description.

Le dispositif selon l'invention peut être utilisé pour la sécurisation soit d'un ensemble, chaîne de développement logicielle et microprocesseur associé, déjà existant soit d'un ensemble spécifique. Le surcoût induit par la sécurité, rajouté aux fonctions déjà existantes, est faible.

La chaîne de développement logicielle 1, est semblable à une chaîne de développement classique, jusqu'à l'étape de compilation et d'obtention du logiciel exécutable. Elle comprend en plus une étape spécifique de chiffrement du logiciel exécutable.

C'est ce logiciel exécutable chiffré, et donc protégé contre la décompilation et la modification qui est distribué. Le logiciel source, et le logiciel exécutable clair restent confinés chez le développeur du logiciel. Le surcoût dû à cette étape de chiffrement est négligeable. Il se limite à l'adjonction et l'exécution d'un module supplémentaire dans une chaîne de développement.

Les moyens de distribution du logiciel chiffré sont identiques aux moyens classiques de distribution : disquette, mémoire morte, téléchargement ou autre, sans aucun surcoût lié à la sécurité, ce qui constitue un avantage important du dispositif selon l'invention.

Un exemple d'architecture d'un microprocesseur MALP selon l'invention est illustré par le schéma synoptique de la figure 2.

Le microprocesseur MALP 2 est réalisé préférentiellement sous la forme d'une puce électronique sur laquelle sont intégrés une fonction microprocesseur classique 3, nommée "coeur de microprocesseur" dans la suite de la description, et un module cryptographique 4 spécifique.

Le microprocesseur MALP 2 peut être également réalisé sous forme d'un circuit hybride hermétique supportant deux puces séparées montées sur un même substrat, ou par toute autre réalisation assurant une protection physique de haut niveau.

On considérera dans la suite de la description, que la réalisation du microprocesseur MALP 2 est faite sous la forme d'une même puce électronique, dénommée par la suite "puce MALP 2".

Le module cryptographique 4 a pour fonction de fournir à l'extérieur de la puce MALP 2 des signaux d'adresses et de données chiffrés, et de déchiffrer les signaux de données entrants sur la puce MALP 2, selon un algorithme inverse de celui réalisé dans la chaîne de développement logicielle 1 lors du chiffrement du logiciel exécutable.

Des signaux de contrôle émis, en clair, par le coeur du microprocesseur 3, correspondant aux signaux normalement émis par un microprocesseur, lecture/écriture (R/$\overline{\text{W}}$), viennent paramétrer le module cryptographique 4 et sont également fournis à l'extérieur de la puce MALP 2.

Avant de poursuivre la description de l'invention, une définition de l'espace adressable d'un microprocesseur est donnée ci-après.

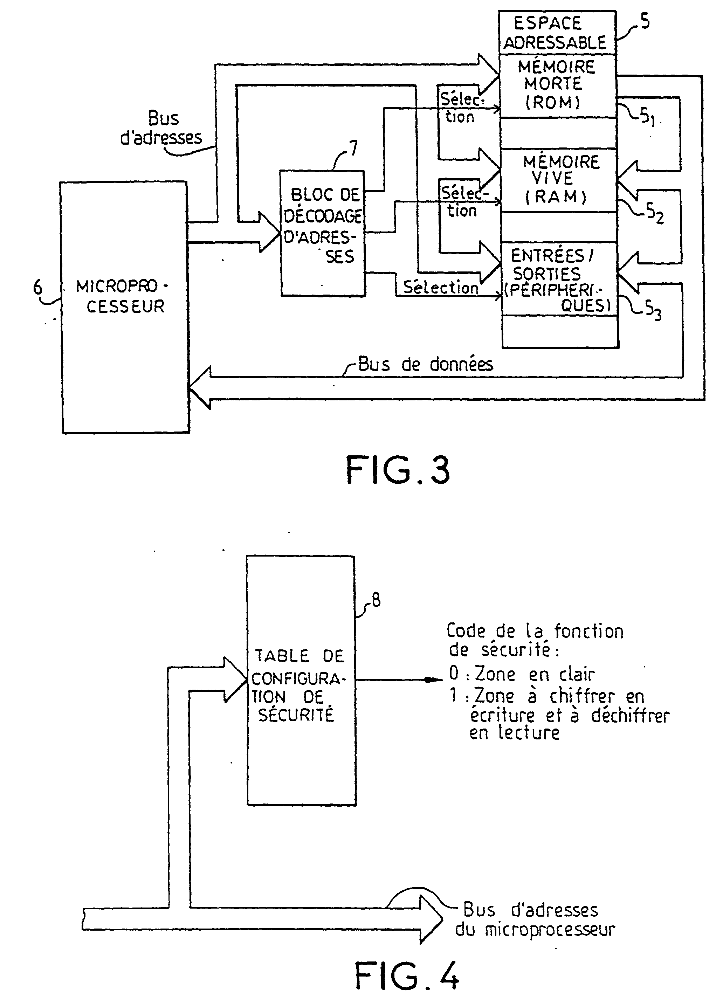

Cette définition est soutenue par un exemple d'application à microprocesseur illustré par la figure 3.

L'espace adressable 5 d'un microprocesseur 6 définit une zone virtuelle de cellules mémoire élémentaires dans laquelle celui-ci peut potentiellement accéder par l'intermédiaire de son bus d'adresse.

Lorsque le microprocesseur 6 exécutant un logiciel doit accéder à une cellule mémoire, il se contente de présenter le numéro de cette cellule sur son bus d'adresse. La reconnaissance de cette adresse est à la charge des composants externes présents sur la carte électronique supportant le microprocesseur, non représentée.

Selon les applications, l'espace adressable 5 est occupé différemment et plus ou moins complètement. Sur une carte électronique à microprocesseur, celui-ci est connecté à un certain nombre de composants physiques, mémoires ou périphériques, que le développeur de la carte a implantés à des adresses qu'il a choisies.

Lorsque le microprocesseur 6 émet une adresse, un bloc externe 7, spécifique à l'application, dit de "décodage d'adresse", discrimine celle-ci pour valider le composant concerné.

De façon générale, un composant physique possède plusieurs cellules mémoire élémentaires. Un circuit périphérique en possède aujourd'hui une dizaine. Un composant mémoire en possède, dans l'état actuel de la technologie, de plusieurs milliers à plusieurs millions.

Chaque composant physique occupe donc une zone dans l'espace adressable 5 du microprocesseur 6. Le rôle du bloc de décodage d'adresse est de trier grossièrement les adresses en générant un signal de sélection vers un composant lorsque l'adresse émise correspond à la zone qu'occupe ce composant. Le tri fin de l'adresse, permettant d'identifier individuellement chaque cellule mémoire est réalisé par le composant lui-même.

Dans cet exemple, l'espace adressable 5 du microprocesseur 6, comprend les différentes zones suivantes :

- une zone de mémoire morte, ou ROM $5_1$, abréviation anglo-saxonne pour "Read Only Memory". Elle peut contenir le logiciel de démarrage de la machine, des routines de bas niveau à usage général, ainsi que les constantes.
- une zone de mémoire vive, ou RAM $5_2$, abréviation anglo-saxonne pour "Random Access Memory".. Elle peut contenir le logiciel de haut niveau, ainsi que les variables de travail de l'application, et
- un espace d'entrée/sortie $5_3$, qui correspond aux registres des différents composants périphériques du microprocesseur 6 présents sur la carte.

Concernant le logiciel, il est à la charge de son développeur d'assurer la cohérence entre les adresses auxquelles il va faire accéder le microprocesseur, et l'occupation de l'espace adressable telle qu'elle est définie sur la carte par le bloc de décodage d'adresse 7.

Dans le dispositif selon l'invention, l'observabilité externe de l'exécution d'un logiciel est limitée en chiffrant les bus d'adresses et de données. Concernant le bus d'adresses, l'émission d'une adresse A par le coeur de microprocesseur 3 provoque, via le module cryptographique 4, placé en coupure, la sortie d'une adresse A' sur le bus d'adresse externe de la puce MALP 2.

Pour assurer le bonne exécution d'un logiciel chiffré sur la carte électronique, une contrainte fonctionnelle d'un tel système impose que l'adresse A' transmise aux composants entourant le microprocesseur aboutisse, par le dispositif de décodage d'adresse, à la sélection d'une case mémoire de même type que l'aurait fait l'adresse A.

Par exemple, un accès à une case RAM par l'adresse A doit aboutir après chiffrement à un accès RAM équivalent à l'adresse A'. Il en est de même pour un accès ROM. Enfin, concernant les circuits périphériques, le chiffrement ne peut pas être envisagé dans le cas des circuits possédant des registres non fonctionnellement équivalents.

Pour respecter cette contrainte fonctionnelle dans le dispositif selon l'invention, l'espace adressable est divisé en zones homogènes (RAM, ROM, EEPROM, abréviation anglo-saxonne pour "Electrically Erasable Programmable Read Only Memory", périphérique, etc.), de taille fixe ou variable, et met en oeuvre une fonction cryptographique ayant pour propriété de générer une adresse A' à partir d'une adresse A telle que A et A' appartiennent à la même zone.

Ces zones sont traitées différemment par la puce MALP 2 suivant leur contenu, de façon à assurer un niveau de sécurité optimal en diminuant l'observabilité externe du déroulement du logiciel. Le tableau suivant recense les différents cas:

| Type de zone | Contenu | Flux des informations | Fonction de sécurité associée |
|---|---|---|---|
| | Logiciel | Lecture seule | Zone chiffrée par le distributeur du logiciel à l'issue de la compilation, et déchiffrée par le microprocesseur MALP au cours de l'exécution |

(suite)

| Type de zone | Contenu | Flux des informations | Fonction de sécurité associée |
|---|---|---|---|
| Mémoire morte | Logiciel d'initialisation | Lecture seule | Zone laissée en clair par le distributeur du logiciel à l'issue de la compilation, pour permettre au microprocesseur MALP d'initialiser ses fonctions de sécurité |
| | Constantes | Lecture seule | Zone chiffrée par le distributeur du logiciel à l'issue de la compilation, et déchiffrée par le microprocesseur MALP au cours de l'exécution |
| Mémoire vive | Logiciel | Lecture seule | Zone chiffrée par le distributeur du logiciel à l'issue de la compilation, et déchiffrée par le microprocesseur MALP au cours de l'exécution |
| | Variables | Lecture/écriture | Zone chiffrée en écriture et déchiffrée en lecture par le microprocesseur MALP |
| Entrées/ sorties | Echange avec un périphérique standard | Lecture/écriture | Zone laissée en clair puisque la fonction de chiffrement/ déchiffrement n'est pas disponible sur les périphériques standards |
| | Echange avec un périphérique chiffrant MALP | Lecture/écriture | Zone chiffrée par le microprocesseur MALP et déchiffrée par le périphérique en écriture, et chiffrée par le périphérique et déchiffrée par le microprocesseur MALP en lecture. Dans ce cas le périphérique doit posséder une dispositif cryptographique symétrique de celui du microprocesseur MALP. |

La puce MALP 2 utilise une table de configuration 8, découpant l'espace adressable du microprocesseur en zones, qui peuvent être soit de taille égale, soit de taille variable suivant les réalisations. Il peut être nécessaire de prévoir deux tables si le microprocesseur à sécuriser possède un espace adressable d'entrées/sorties différent de l'espace adressable mémoire.

Cette table 8 contient pour chaque zone un champ descripteur de la fonction de sécurité à réaliser. Le rôle d'une telle table est de définir une correspondance entre la zone adressée et la fonction de sécurité associée. La figure 4 illustre une telle table.

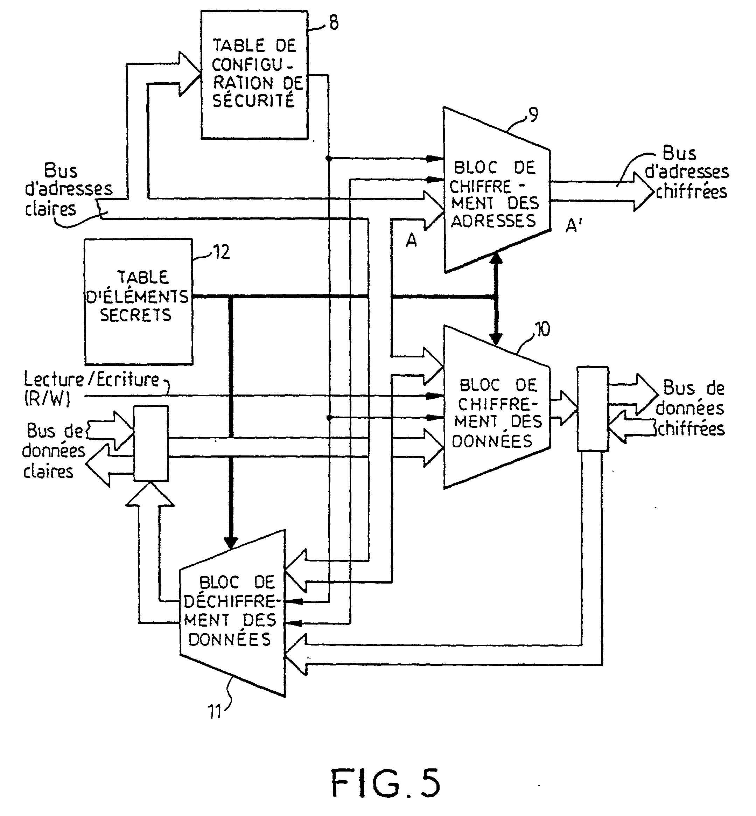

La figure 5 illustre un schéma synoptique du module cryptographique 4 de la puce MALP 2.

Le module cryptographique 4 est placé en coupure sur les bus d'adresses et de données.

Le module cryptographique 4 comporte

- un premier bloc de chiffrement 9 recevant sur son entrée des adresses, en clair, issues du coeur de microprocesseur 3 et délivrant en sortie, les mêmes adresses chiffrées, l'adresse en clair et l'adresse chiffrée désignant respectivement une case mémoire fonctionnellement identique dans l'espace adressable 5 par le microprocesseur MALP 2,

- un deuxième bloc de chiffrement 10 recevant en entrée des données en clair issues du coeur de microprocesseur 3 et délivrant en sortie les mêmes données chiffrée, et
- un premier bloc de déchiffrement 11 recevant en entrée des données chiffrées reçues par le microprocesseur MALP 2 et délivrant en sortie les mêmes données, en clair, à l'entrée du coeur de microprocesseur 3.

Chaque bloc 9, 10 et 11 est paramétrable par une configuration de sécurité issue de la table 8, déterminée en fonction de l'adresse émise par le coeur de microprocesseur 3, et par un signal de contrôle, en clair correspondant à la commande Lecture/Ecriture (R/$\overline{W}$) générée habituellement par un microprocesseur.

Pour répondre à la contrainte fonctionnelle décrite précédemment, consistant à diviser l'espace adressable en zones homogènes, de taille fixe ou variable afin que le module cryptographique 4 génère une adresse A' à partir d'une adresse A telle que A et A' appartiennent à la même zone fonctionnellement identique, une fonction cryptographique de type bijection peut être utilisée au sein de cette zone. Pour augmenter la complexité cryptographique des blocs de chiffrement 10 et 11, les adresses peuvent être utilisées, en clair, comme paramètres d'entrée supplémentaires.

La sécurité du microprocesseur MALP 2 repose sur le partage d'une information, ou clé, entre le développeur du logiciel et le microprocesseur MALP 2 qui exécutera ce logiciel. Cette information est stockée par exemple dans une table, appelée table d'éléments secrets 12. Ces éléments secrets sont fournis à chaque bloc 9, 10 et 11 du module cryptographique 4.

Pour que le microprocesseur MALP 2 puisse correctement effectuer l'opération de déchiffrement, il doit également pouvoir localiser les zones chiffrées et les zones laissées en clair. Cette information non secrète, est contenue dans la table de configuration de sécurité 8 qui est initialisée lors du démarrage du logiciel.

L'élaboration et la gestion de cette clé secrète entre le développeur du logiciel et le microprocesseur MALP 2 peut faire appel par exemple aux procédés classiques à base de clés secrètes ou de clés asymétrique.

Dans ce cas d'utilisation de clés secrètes, chaque développeur de logiciel choisit une clé connue de lui seul. Chaque clé doit être introduite dans le microprocesseur MALP 2 pour y être mémorisée de façon non volatile et non observable dans la table d'éléments secrets 12.

Cette opération d'introduction de clé doit être réalisée sur chaque site possédant un microprocesseur MALP 2 de telle façon que la non-divulgation de la clé soit assurée:

- on peut par exemple envisager de faire réaliser l'opération par une personne habilitée équipée d'un équipement de programmation spécifique.
- on peut également introduire une clé chiffrée à l'aide d'un élément secret connu à la fois du développeur du logiciel et du microprocesseur MALP 2. Le déchiffrement s'effectue au sein de la puce MALP 2, ce qui interdit une observation externe. Dans le cas où plusieurs logiciels venant de développeurs différents doivent cohabiter, cet élément secret doit être connu de l'ensemble des développeurs.

Le microprocesseur MALP 2 possède dans ce cas toutes les clés secrètes. La déclaration d'une nouvelle clé associée à un nouveau développeur impose une opération d'introduction de clé dans chaque microprocesseur MALP 2.

Dans le cas d'utilisation de clés asymétriques, le développeur peut par exemple utiliser un protocole de type RSA, abréviation anglo-saxonne pour "Rivest, Shamir, et Adleman". Ce type de protocole repose sur un algorithme tel que la procédure de chiffrement d'un logiciel soit publique, et puisse être réalisée par tous les développeurs, mais que l'opération de déchiffrement ne puisse être réalisée que par le microprocesseur MALP 2, qui possède un élément secret connu de lui seul.

L'intérêt d'une telle solution est que le procédé est évolutif sans qu'il soit besoin d'intervenir sur les microprocesseurs MALP 2. En particulier, l'exécution d'un logiciel venant d'un nouveau développeur ne nécessite aucune opération particulière.

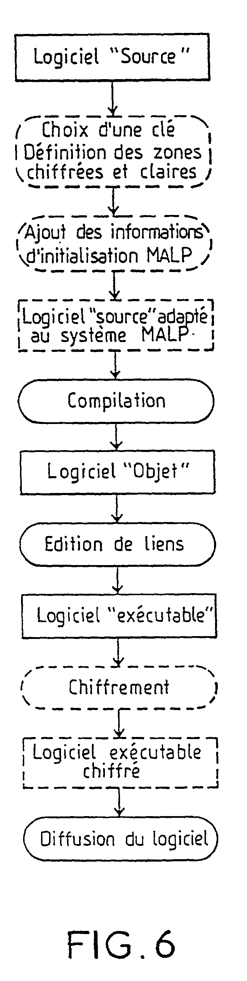

Le schéma de la figure 6 présente à la fois les étapes réalisées dans une chaîne de développement logicielle classique, et dans une chaîne de développement logicielle d'un dispositif selon l'invention.

La chaîne de développement logicielle comprend trois étapes supplémentaires qui sont respectivement délimitées par une ligne fermée discontinue :

- le choix d'une clé, et la définition des zones chiffrées et des zones claires.
- l'intégration des informations d'initialisation MALP. Il s'agit des informations nécessaires à l'initialisation de la fonction cryptographique dans le microprocesseur MALP 2. Ce sont, d'une part des informations permettant au microprocesseur MALP 2 de retrouver la clé de chiffrement utilisée par le développeur du logiciel (numéro ou identifiant de clé), et d'autre part de la définition des zones de l'espace adressable qui seront chiffrées, et de celles qui seront laissées en clair. Ces informations peuvent par exemple être stockées sous forme de constante. Elles seront utilisées par le microprocesseur MALP 2 lors du lancement du logiciel.

- le chiffrement du logiciel. Certaines zones du logiciel exécutable sont chiffrées à l'aide d'un outil logiciel spécifique. Le chiffrement est réalisé à l'aide de la clé qui sera connue du microprocesseur MALP 2 au moment de l'exécution du logiciel à protéger.

En résumé, le principe de l'invention consiste à rassembler sur une même puce électronique, ou sur un même substrat dans le cas d'un circuit hybride, ou sur tout autre support, une fonction microprocesseur, et un dispositif cryptographique électronique, placé en coupure sur les signaux d'entrées et de sorties de ce microprocesseur (adresses, données, signaux de contrôle, etc.). L'ensemble électronique ainsi constitué est nommé microprocesseur MALP.

L'action du module cryptographique 4 consiste à crypter les signaux d'adresses et de données sortants du coeur de microprocesseur 3, et à décrypter les signaux de données entrants, de telle sorte que le logiciel soit stocké à l'extérieur de la puce MALP 2 sous forme cryptée, mais soit reçu et traité par le coeur de microprocesseur 3 sous forme claire, le passage chiffré/clair étant réalisé dans le microprocesseur MALP 2 lui-même. Le module cryptographique 4 est initialisé par une clé stockée sur la puce MALP 2 en mémoire de type ROM, EEPROM, RAM ou autre, et dont le numéro ou identifiant se trouve en clair dans le logiciel à déchiffrer.

La combinaison, sur une même puce électronique, ou sur une même substrat, d'un coeur de microprocesseur 3 et d'un module cryptographique 4 en coupure sur ses signaux d'entrées/sorties permet de distribuer des logiciels exécutables sous forme cryptée, sur quelque support que ce soit, de façon totalement transparente pour l'utilisateur du logiciel, en disposant de la sécurité physique lié au confinement des informations sensibles sur une puce électronique ou dans un circuit hybride très difficilement observables. L'utilisateur peut alors se servir normalement de ce logiciel, sans jamais posséder sa forme décryptée.

La seule contrainte apportée par le dispositif selon l'invention se situe chez le concepteur du logiciel, qui peut utiliser des moyens classiques de développement, depuis le codage du fichier source, jusqu'à la compilation en code machine, mais doit effectuer sur le fichier binaire obtenu l'opération de cryptage inverse de celle qui est ensuite réalisée par le module cryptographique 4 adjoint au microprocesseur MALP 2 lors de l'exécution.

## Revendications

1. Dispositif de sécurisation de systèmes d'informations organisés autour de microprocesseurs, comportant, sur un même support, un coeur de microprocesseur (3) couplé à un module cryptographique (4) en coupure sur les signaux d'entrée/sortie du coeur de microprocesseur (3), l'ensemble ainsi formé étant capable d'exécuter un logiciel chiffré généré par une chaîne de développement logicielle (1) standard à laquelle est rajoutée une fonction de chiffrement, et permettant d'une part, de fournir à l'extérieur du dispositif des signaux d'adresses et de données chiffrées sortants selon le même algorithme que celui utilisé lors du chiffrement du logiciel, et d'autre part, de déchiffrer des signaux de données chiffrées entrants sur le dispositif selon un algorithme inverse de celui réalisé lors du chiffrement du logiciel ou des signaux de données sortants,

    le module cryptographique (4) comportant :

    - un premier bloc de chiffrement (9) recevant sur son entrée des adresses, en clair, issues du coeur de microprocesseur (3) et délivrant en sortie, les mêmes adresses chiffrées, l'adresse en clair et l'adresse chiffrée désignant respectivement une case mémoire fonctionnellement identique dans l'espace adressable par le dispositif,
    - un deuxième bloc de chiffrement (10) recevant en entrée des données, en clair, issues du coeur de microprocesseur (3), et délivrant en sortie les mêmes données chiffrées, et
    - un premier bloc de déchiffrement (11) recevant en entrée des données chiffrées reçues par le dispositif, et délivrant en sortie les mêmes données, en clair, en entrée du coeur de microprocesseur (3) :

        chaque bloc (9, 10 et 11) recevant un élément secret, ou clé depuis une première table (12), et connu seulement d'un utilisateur habilité ;
        caractérisé en ce que chaque bloc (9, 10 et 11) reçoit des informations depuis une deuxième table (8) recevant sur son entrée les signaux d'adresse découpant l'espace adressable en zones de taille déterminée et définissant une correspondance entre la zone adressée par le coeur de microprocesseur et la fonction de sécurité associée, et par au moins un signal de contrôle, émis en clair, par le coeur de microprocesseur (3).

2. Dispositif selon la revendication 1, caractérisé en ce que la chaîne de développement logicielle (1) reçoit comme donnée d'entrée un logiciel "source" adapté en fonction des contraintes de sécurisation et génère, par compilation classique puis par une opération de chiffrement un logiciel "exécutable" chiffré.

**Claims**

1. Device for securing information systems organized around microprocessors, comprising, on one and the same medium, a microprocessor core (3) coupled to a cryptographic module (4) spliced into the input/output signals of the microprocessor core (3), the assembly thus formed being capable of executing a piece of enciphered software generated by a standard software development facility (1) to which is added an enciphering function, and making it possible on the one hand to output from the device outgoing signals for addresses and data enciphered according to the same algorithm as that used when enciphering the piece of software, and on the other hand to decipher incoming signals for enciphered data entering the device according to an algorithm inverse to that carried out when enciphering the piece of software or outgoing data signals,

   the cryptographic module (4) comprising:

   - a first enciphering block (9) receiving, on its input, addresses, as plaintext, emanating from the microprocessor core (3) and delivering, as output, the same addresses enciphered, the plaintext address and the enciphered address respectively designating a functionally identical memory slot in the space addressable by the device,
   - a second enciphering block (10), receiving, as input, data, as plaintext, emanating from the microprocessor core (3), and delivering as output the same data enciphered, and
   - a first deciphering block (11) receiving as input enciphered data received by the device, and delivering as output the same data, as plaintext, to the input of the microprocessor core (3);

   each block (9, 10 and 11) receiving a secret element, or key, from a first table (12), and known only to an authorized user;
   characterized in that each block (9, 10 and 11) receives information from a second table (8) receiving on its input the address signals, partitioning the addressable space into areas of specified size and defining a correspondence between the area addressed by the microprocessor core and the associated security function, and by at least one monitoring signal, sent as plaintext, by the microprocessor core (3).

2. Device according to Claim 1, characterized in that the software development facility (1) receives as input datum a piece of "source" software adapted as a function of the security constraints and generates, by conventional compilation followed by an enciphering operation, an enciphered "executable" piece of software.


**Patentansprüche**

1. Sicherungsvorrichtung für um Mikroprozessoren organisierte Informationssysteme, die auf demselben Träger einen Mikroprozessor-Kern (3) umfaßt, der mit einem in die Eingangs/ Ausgangssignalverbindungen des Mikroprozessor-Kerns (3) eingefügten Kryptographie-Modul (4) verbunden ist, wobei die so gebildete Gesamtheit eine verschlüsselte Software ausführen kann, die durch eine Standard-Softwareentwicklungskette (1) erzeugt wird, der eine Verschlüsselungsfunktion hinzugefügt ist, und einerseits ermöglicht, nach außerhalb der Vorrichtung Adressen- und Daten-Ausgangssignale zu liefern, die gemäß demselben Algorithmus wie jener, der bei der Verschlüsselung der Software verwendet wird, verschlüsselt sind, und andererseits ermöglicht, verschlüsselte Daten-Eingangssignale in die Vorrichtung gemäß einem Algorithmus zu entschlüsseln, der zu jenem entgegengesetzt ist, der bei der Verschlüsselung der Software oder der Daten-Ausgangssignale ausgeführt wird,
   wobei das Kryptographie-Modul (4) umfaßt:

   - einen ersten Verschlüsselungsblock (9), der an seinem Eingang unverschlüsselte Adressen empfängt, die vom Mikroprozessor-Kern (3) ausgegeben werden, und am Ausgang dieselben Adressen verschlüsselt liefert, wobei die unverschlüsselte Adresse und die verschlüsselte Adresse jeweils einen Speicherplatz bezeichnen, der in dem von der Vorrichtung adressierbaren Raum funktional identisch ist,
   - einen zweiten Verschlüsselungsblock (10), der am Eingang unverschlüsselte Daten empfängt, die vom Mikroprozessor-Kern (3) ausgegeben werden, und am Ausgang dieselben Daten verschlüsselt liefert, und
   - einen ersten Entschlüsselungsblock (11), der am Eingang verschlüsselte Daten empfängt, die von der Vorrichtung empfangen werden, und am Ausgang dieselben Daten unverschlüsselt zum Mikroprozessor-Kern (3) liefert; microprocessor core (3), and delivering as output the same data enciphered, and
   - a first deciphering block (11) receiving as input enciphered data received by the device, and delivering as output the same data, as plaintext, to the input of the microprocessor core (3);

   each block (9, 10 and 11) receiving a secret element, or key, from a first table (12), and known only to an authorized user;

characterized in that each block (9, 10 and 11) receives information from a second table (8) receiving on its input the address Signals, partitioning the addressable space into areas of specified size and defining a correspondence between the area addressed by the microprocessor core and the associated security function, and by at least one monitoring Signal, sent as plaintext, by the microprocessor core (3).

2. Device according to Claim 1, characterized in that the software development facility (1) receives as input datum a piece of "source" Software adapted as a function of the security constraints and generates, by conventional compilation followed by an enciphering Operation, an enciphered "executable" piece of software.

## FIG.1

## FIG.2

FIG.3

FIG.4

FIG.5

```
┌─────────────────────────┐
│    Logiciel "Source"    │
└─────────────────────────┘
              │
              ▼
╭─────────────────────────╮
│     Choix d'une clé     │
│  Définition des zones   │
│    chiffrées et claires │
╰─────────────────────────╯
              │
              ▼
╭─────────────────────────╮
│  Ajout des informations │
│   d'initialisation MALP │
╰─────────────────────────╯
              │
              ▼
┌─────────────────────────┐
│ Logiciel "source" adapté│
│    au système MALP·     │
└─────────────────────────┘
              │
              ▼
(      Compilation       )
              │
              ▼
┌─────────────────────────┐
│    Logiciel "Objet"     │
└─────────────────────────┘
              │
              ▼
(    Edition de liens     )
              │
              ▼
┌─────────────────────────┐
│  Logiciel "exécutable"  │
└─────────────────────────┘
              │
              ▼
(      Chiffrement       )
              │
              ▼
┌─────────────────────────┐
│   Logiciel exécutable   │
│         chiffré         │
└─────────────────────────┘
              │
              ▼
(   Diffusion du logiciel  )
```

FIG. 6